# EUROPEAN PATENT APPLICATION

(11) **EP 4 609 716 A1**
(43) Date of publication of application: **03.09.2025**
(21) Application number: 23810116.6
(22) Date of filing: 16.10.2023
(51) Int. Cl.: A21D 6/00, A21D 8/04, A21D 13/066

(54) **METHOD FOR PREPARING A FLOUR THAT IS SUITABLE FOR COELIACS**

(30) Priority: 25.10.2022 ES 202230921
(71) Applicant: Bread Free, S.L., 31500 Tudela (ES)
(72) Inventor: GÓMEZ-BRAVO PUERTA, Daniel, 28001 MADRID (ES); DOS SANTOS, Luana Cristina, 31500 TUDELA (ES); TOLEDO RUIZ, Mercedes, 30800 LORCA (ES)
(74) Representative: Sugrañes, S.L.P.
(86) International application number: PCT/ES2023/070609
(87) International publication number: WO 2024/089308

(57) **Abstract**

The present invention relates to a method for preparing a flour that is suitable for coeliacs. The method comprises treating a mixture of cereal flour and water with ultrasound before proceeding to incubate said mixture with an enzyme. The method allows gluten-free products to be produced in accordance with European legislation. It also relates to a flour that is suitable for coeliacs, and a food product that is suitable for coeliacs comprising said flour.

## Description

### TECHNICAL FIELD

The present invention relates to a method for preparing a flour, comprising wheat flour, which is suitable for coeliacs, since it can be considered a substantially gluten-free food, since it contains no more than 20 ppm of gluten, preferably no more than 10 ppm, and more preferably less than 10 ppm.

### PRIOR STATE OF THE ART

Coeliac disease (CD) is an autoimmune disorder caused by ingestion of gluten proteins present in wheat, barley, rye and some oat varieties affecting approximately 1% of the general population. In these patients, gluten ingestion causes an inflammatory reaction in the upper part of the small intestine that causes tissue damage and intestinal hair atrophy.

In addition to individuals suffering from CD, there are individuals who are gluten-sensitive, the percentage of which keeps increasing. According to the review article by Mansueto's et al., Non-Celiac Gluten Sensitivity: Literature Review, J. Am. Coll. Nutrition, 2014, 33(1), 39-54, one of the factors that may have contributed to the increase in the gluten-sensitive population has been the use of new types of wheat, which are gluten-fortified.

Gluten is a mixture of proteins, glutelins and gliadins, found in the endosperm of wheat and other cereals such as barley, rye and spelt. Gliadins have been identified as the main component in gluten that is toxic to individuals suffering from CD.

Although most dietary proteins are digested by gastrointestinal proteases to simple amino acids, dipeptides or tripeptides, gluten proteins are not completely digested and remain in the intestine. These peptides are capable of being internalised into the intestinal cells and, accordingly, the glutaminase residues they possess can be deaminated by tissue transglutaminase. The deaminated peptides induce an immunological reaction, producing a decrease in intestinal absorption that can lead to symptoms such as diarrhoea, anaemia, growth retardation, weight loss, bone disorders, neurological complications, cancer, among others.

Recent studies have reported the detection of a limited number of dominant gluten immunogenic peptides (GIPs) that share similarities with epitopes present on the α-gliadin 33-mer, which proved to be highly resistant to proteolytics and is considered the most immunodominant peptide within gluten in coeliac disease. The GIPs were detectable and quantifiable in very different types of foods that were difficult to analyse, revealing the potential immunogenicity by detecting T cell activity in coeliac patients. But GIPs were also found in faeces and urine of coeliac patients on a supposedly gluten-free diet (GFD), showing the ability to resist as well as to be absorbed and excreted from the body, providing the first simple and objective means to assess GFD adherence. Methods for the specific and sensitive detection of the most active GIP in foods and biological fluids are rational candidates that can use similar standard analytical references for the determination of the immunopathological risk of gluten exposure in gluten-related diseases.

The increase in individuals that are sensitive to gluten has been translated into an increase in the commercial offer of gluten-free products. These products do not contain cereal flours that contain gluten, but are mainly based on rice, corn, millet, quinoa, buckwheat, amaranth, chickpea, soybean, lupine flours, and they may also contain almond or chestnut flour. In the state of the art, French patent application FR-A-2765076, and international patent applications WO-A-2007/137578, WO-A-2010/103158, and WO-A-2016/042178 have disclosed related developments. Nevertheless, the gluten content in wheat flour provides appropriate organoleptic characteristics to numerous food products, such as texture and flavour, which are more difficult to achieve with gluten-free flours, particularly when it comes to bread and bread-related products.

In the state of the art, methods have been described to reduce the gluten content in wheat products.

For example, Walter et al., Degradation of gluten in wheat bran and bread drink by means of a proline-specific peptidase, J. Nutr. Food Sci., 2014: 293, describes the degradation of wheat gluten by means of an *Aspergillus niger* prolyl endopeptidase. The treatment was carried out under different conditions of enzyme concentration, incubation time, and pH value. The treatment of two types of wheat bran in the laboratory led to obtaining gluten values below 20 mg/kg.

Walter et al., Production of gluten-free wheat starch by peptidase treatment, J. Cereal Sci., 2014, 60, 202-9, describes a method to degrade wheat starch gluten with an *Aspergillus niger* prolyl endoprotease enzyme to prepare bread with a reduced gluten content. Different enzyme concentrations and incubation times were tested, and samples with different final gluten values were obtained, some of them below the detection limit.

Heredia-Sandoval et al., Gluten degradation in wheat flour with Aspergillus niger prolyl-endopeptidase to prepare a gluten-reduced bread supplemented with an amaranth blend, J. Cereal Sci., 2016, 71, 73-7, describes a method to reduce the gluten content in wheat flour by means of treatment with an *Aspergillus niger* prolyl endopeptidase. Different enzyme concentrations, incubation times and temperatures, as well as flour concentrations, were tested.

Kumar et al., Prolyl endopeptidase-degraded low immunoreactive wheat flour attenuates immune responses in Caco-2 intestinal cells and gluten-sensitized BALB/c mice, Food Chem. Tox., 2019, 129, 466-75, describes a method to degrade gluten proteins from a low immunoreactivity wheat flour (HD-2851, *National Seeds Corp.*, New Delhi, India) by means of incubation with an *Aspergillus niger* prolyl endopeptidase. The incubation of said wheat flour with the enzyme was carried out at pH 4, with an enzyme concentration of 4 PPU/g, for 5 h at a temperature of 40 °C.

Kumar et al., Targeted degradation of gluten proteins in wheat flour by prolyl endoprotease and its utilization in low immunogenic pasta for gluten sensitivity population, J. Cereal Sci., 2019, 87, 59-67, describes a method to degrade wheat flour gluten proteins by means of an *Aspergillus niger* prolyl endoprotease. The flour incubation method with the enzyme was carried out using 4 PPU/g of flour, in acetate-buffered medium at pH 4 at a temperature of 40 °C and for 5 hours. Under these conditions, a gluten content of 48 ppm was obtained.

International patent application WO-A-2010/073283 discloses a method to degrade gluten in flours by using lactic acid bacteria and fungal proteases, up to a residual gluten concentration of less than 20 ppm.

The gluten content present in the enzymatically treated product is not always described in the disclosures of the prior art.

Therefore, there is a need to have a method to effectively reduce the gluten content in flours, so that they are suitable for coeliacs, which prevent the products obtained from losing their good organoleptic characteristics.

### OBJECT OF THE INVENTION

The object of the present invention is a method to prepare a flour that is suitable for coeliacs.

One aspect of the invention is a flour that is suitable for coeliacs.

One aspect of the invention is a food product that is suitable for coeliacs comprising said flour.

### FIGURES

### Figure 1

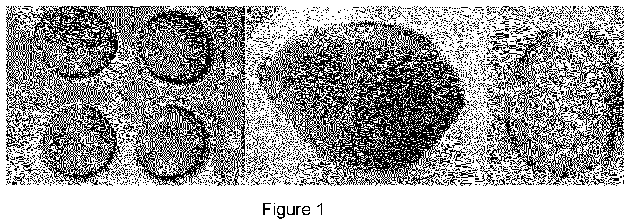

Figure 1 shows different views of muffins prepared with treated flour that is suitable for coeliacs.

### DETAILED DESCRIPTION OF THE INVENTION

The object of the present invention is a method for preparing a substantially gluten-free cereal flour comprising incubating a mixture of flour and water with an enzyme selected from prolyl endoprotease, glutaminase, exopeptidase, endopeptidase, or mixture thereof, wherein the flour and water mixture is subjected to ultrasound treatment before incubation with the enzyme.

The authors of the present invention have developed a method for the preparation of a flour comprising wheat flour that is suitable for coeliacs, since it contains no more than 20 ppm of gluten, preferably no more than 10 ppm of gluten, and more preferably less than 10 ppm of gluten. In this way, products suitable for coeliacs can be prepared with cheaper raw materials, preserving the flavour, texture and nutritional quality of the products obtained therefrom.

In the context of the invention the term "substantially gluten-free" relates to a flour containing no more than 20 ppm of gluten, preferably no more than 10 ppm of gluten, and more preferably less than 10 ppm of gluten.

In the present description, as well as in the claims, the singular forms "a", "an" and "the" include the plural reference unless the context clearly indicates otherwise. The terms "approximately" or "around" refer to a deviation of ± 10% from the indicated value, preferably of ± 5 %. The percentages are expressed in % by weight, unless otherwise stated. The ranges defined by the terms "between... and".." or by the ter"s "from... to".." also include said set ends thereof, and also include any narrower subranges.

In the context of the present invention, flour and cereal flour are used synonymously, and also include flour derivatives such as bran, germ or starch.

### Cereal flour

The method of the invention uses a cereal flour comprising gluten. The appropriate flour to be used in said method can be selected from wheat flour, barley flour, wheat bran, oat flour, rye flour, spelt flour, Kamut flour, wheat starch, wheat germ, and mixtures thereof. In one embodiment, the flour is selected from wheat flour, barley flour, oat flour, rye flour, spelt flour, Kamut flour, and mixtures thereof. In a preferred embodiment, the flour is selected from wheat flour, barley flour, oat flour, and mixtures thereof. In a more preferred embodiment, the flour is wheat flour.

In said method, the flour or a mixture of flours, subsequently mixed with water, is incubated with an enzyme. The proportion of flour in water is generally comprised between 0.1 g/ml and 0.7 g/ml, preferably between 0.2 g/ml and 0.5 g/ml, more preferably between 0.3 g/ml and 0.45 g/ml, and even more preferably about 0.4 g/ml.

### Enzyme

In the method of the invention, an enzyme selected from prolyl endoprotease, glutaminase, exopeptidase, endopeptidase, or mixture thereof, is used. Preferably a prolyl endoprotease is used. This enzyme can also be called prolyl endopeptidase. Preferably a prolyl endoprotease is used, and more preferably an *Aspergillus niger* fungus prolyl endoprotease.

In one embodiment, the prolyl endoprotease enzyme is incorporated in the form of a solution comprising between 45% to 55% by weight of glycerin, preferably about 50% by weight of glycerin.

Prolyl endoprotease enzymes are well known and commercially available. For example, the company DSM (Netherlands) markets a prolyl endoprotease enzyme.

Glutaminase enzymes are also commercially available, for example, through the company Amano Enzyme (USA).

Mixtures of exopeptidase and endopeptidase enzymes are also commercially available, for example, through the company Novozymes (Denmark).

Prolyl endoprotease activity can be determined by the method described in Luoto et al., Malt hydrolysates for gluten-free applications: Autolytic and proline endopeptidase assisted removal of prolamins from wheat, barley and rye, J. Cereal Sci., 2012, 56, 504-9. The activity is expressed in PSPU/g or PSP/g units, wherein each PSPU or PSP unit is defined as the amount of enzyme required to release 1 µmol of pNA (*p*-nitroanilide) of the substrate Z-Gly-Pro-pNA in 1 minute under defined test conditions: pH = 4.6, temperature = 37 °C, and a concentration of 0.37 mM substrate.

Usually, the enzyme has an activity greater than or equal to 10 PSPU/g. In a preferred embodiment, the enzyme has an activity between 10 and 20 PSPU/g, preferably between 10 and 15 PSPU/g, even more preferably between 10 and 13 PSPU/g.

The ratio between enzymatic activity and flour is generally comprised between 0.1 PSPU/g of flour and 15 PSPU/g of flour, preferably between 0.2 PSPU/g and 10 PSPU/g, more preferably between 0.3 PSPU/g and 5 PSPU/g, more preferably between 0.4 PSPU/g and 2 PSPU/g, more preferably between 0.5 PSPU/g and 1 PSPU/g, and even more preferably about 0.6 PSPU/g.

### Ultrasound treatment

In the method of the invention, the flour and water mixture is subjected to an ultrasound treatment before the incubation with the enzyme.

Said treatment can be carried out with an ultrasonic probe or in an ultrasonic bath. Preferably an ultrasonic probe is used.

The use of an ultrasonic probe allows acoustic energy to be introduced directly into the mixture of cereal flour and water, and is not dependent on its transfer through the water of the ultrasonic bath. With this, the amount of ultrasonic power available for the treatment can be increased. The simplest method is to insert the ultrasonic vibrating tip of the probe into the mixture. Ultrasonic probes generally use frequencies around 20 kHz. The main advantage of using ultrasonic probes is that the ultrasonic power transmitted to the reaction is controllable, and it may reach up to a few hundred W × cm⁻².

In a preferred embodiment, a 20 kHz and 450 W power ultrasonic probe is used, preferably with an amplitude of 21 µm.

Ultrasonic baths are generally used in the laboratory to clean laboratory glassware, medical and laboratory instruments, remove gases dissolved in liquids (degassing), and also to accelerate the dissolution and dispersion of solids, as well as emulsification.

Ultrasonic probes and ultrasonic baths are commercially available, for example, through the Branson company (USA).

### Method

In the method of the invention, cereal flour is mixed with water. Water can be distilled, deionised, or include a buffer system.

Incubation of the flour and water mixture with the enzyme is generally carried out at a pH comprised between 2.0 and 6.5. The pH adjustment of the flour and water mixture can be carried out by adding an acid or by means of the buffer system to a pH comprised between 2.0 and 6.5, preferably between 2.5 and 5.0, more preferably between 3.5 and 4.5, and even more preferably about 4.0.

To adjust the pH, an organic or inorganic acid can be used as acid, such as, for example, acetic acid, citric acid, lactic acid, hydrochloric acid, sulphuric acid, or phosphoric acid.

To adjust the pH, for example, the acetic acid-acetate buffer, the citric acid-citrate buffer, or the citric acid-monohydrogen phosphate buffer can be used as a buffer system. Preferably the acetic-acetate buffer is used. The preparation of buffer solutions is well known to those skilled in the art, and, for example, the renowned Handbook of Chemistry and Physics, CRC Press, describes the same.

In the method of the invention, the incubation of the cereal flour with the enzyme is usually carried out at a temperature between 20 °C and 60 °C, preferably between 25 °C and 55 °C, more preferably between 30 °C and 50 °C, more preferably between 35 °C and 45 °C, and even more preferably between 40 °C and 45 °C.

The incubation time of the cereal flour with the enzyme is generally between 1 h and 48 h, preferably between 10 h and 40 h, preferably between 15 h and 35 h, preferably between 20 h and 30 h, and more preferably approximately 24 h.

After incubation of the flour with the enzyme, the method usually includes additional steps to recover the treated flour, such as, for example, centrifuging the mixture to remove most of the water to obtain a wet dough of treated flour, drying said wet dough, and grinding the treated flour once dry. Drying can be carried out, for example, on stove, oven, rotary drum, scraped surface rotary drum, atomisation, lyophilisation, or convection drying tunnel.

The method of the invention allows obtaining cereal flour with a gluten content below the detection limit, in other words, 10 ppm, according to a Competitive R5 ELISA method. Said method can be found described, for example, in Koehler et al., AACCI Approved Methods Technical Committee Report: Collaborative Study on the Immunochemical Determination of Partially Hydrolyzed Gluten Using an R5 Competitive ELISA, Cereal Foods World, 2013, 58(3), 154-8.

Accordingly, the flour obtained in accordance with the method of the invention can be considered to comply with the European Commission legislation (Regulation (EC) No. 41/2009, 20/01/2009), where it was established that a gluten-free product could contain a maximum of 20 mg of gluten per kg of product, with ease.

### Flour that is suitable for coeliacs

One aspect of the invention is a flour that is suitable for coeliacs obtainable by the method of the invention, wherein the flour is selected from wheat flour, barley flour, oat flour, rye flour, spelt flour, Kamut flour, and mixtures thereof. In a preferred embodiment, the flour is selected from wheat flour, barley flour, oat flour, and mixtures thereof. In a more preferred embodiment, the flour is wheat flour.

The flour that is suitable for coeliacs contains no more than 20 ppm of gluten, preferably no more than 10 ppm of gluten, and more preferably less than 10 ppm of gluten.

### Food product suitable for coeliacs

One aspect of the invention is a food product suitable for coeliacs comprising the flour of the invention containing no more than 20 ppm of gluten, preferably no more than 10 ppm of gluten, and more preferably less than 10 ppm of gluten.

The food product usually comprises other components. In one embodiment, the additional components can be selected from, for example, starch, fat, protein, sugar, chemical propellant, yeast, thickener, minerals, vitamins, aroma, water, or mixtures thereof.

Starch is a reserve polysaccharide typically found in plant cells. It is formed by the bonding of glucose units. In the context of the invention, the following can be used: rice starch, corn, potato, tapioca, or mixtures thereof.

Fat can be solid or liquid. Solid fats include, for example, butter, margarine, lard, and mixtures thereof. Liquid fats include, for example, olive oil, sunflower oil, soy oil, rapeseed oil, corn oil, peanut oil, and mixtures thereof.

The protein can be of animal or vegetable origin, such as, for example, egg, soy protein, pea protein, chickpea protein, lupin protein, or mixture thereof.

In the context of the invention the term sugar includes monosaccharides, disaccharides, sweeteners, and mixtures thereof. Including, for example, saccharose, fructose, glucose, dextrose, maltose, trehalose, lactitol, maltitol, mannitol, xylitol, honey, glucose and fructose syrup, aspartame, sodium cyclamate, sodium saccharin, sucralose, acesulfame potassium, and mixtures thereof.

The chemical propellant is a chemical composition that releases carbon dioxide during the method for preparing the food product when it comes into contact with a liquid or when subjected to the action of heat. Generally the propellant is a mixture of a weak acid salt, usually bicarbonate or alkaline carbonate, and of an acidic compound such as, for example, tartaric acid, citric acid, or disodium phosphate. Usually, it also includes starch to prevent caking.

The amount of chemical propellant to be used can be easily determined by the person skilled in the art.

The yeast that can be used is the yeast from species *Saccharomyces cerevisiae.* It is commonly used in the preparation of bread and cake doughs, where the fermentable sugars present in the dough are converted into carbon dioxide and ethanol. Yeast is available in different forms, the main difference between them being the moisture content. Fresh or pressed yeast typically comes in the form of a block, while dry yeast usually comes in the form of granules.

The amount of yeast to be used can be easily determined by the person skilled in the art.

The thickener is a component that gives structure to the food product. Listed below are possible thickeners: for example, hydroxypropylmethylcellulose (HPMC), hydroxyethyl cellulose (HEC), hydroxypropyl cellulose (HPC), hydroxyethylmethylcellulose (HEMC), xanthan gum, carraghenates, sodium carboxymethylcellulose (CMCNa), psyllium husk flour (*Plantago ovata*), or mixtures thereof.

The food product may also comprise minerals, such as, for example, salts such as sodium chloride, calcium salts, magnesium salts, or mixtures thereof.

The food product may also comprise vitamins, such as, for example, vitamin K1, vitamin K2, vitamin D, vitamin D2, vitamin D3, vitamin B12, or mixture thereof.

Aromas can be included in the food product to give it a specific flavour. The aroma can be incorporated in the form of an extract, diluted in a base, or in the form of seeds. Aromas include, for example, cinnamon, vanilla, vanilla sugar, lemon extract, orange extract, rose water, orange blossom water, cumin seeds, cardamom seeds, or clove.

The water is incorporated in the amount that the person skilled in the art can easily adjust depending on the product to be prepared.

In one embodiment, the food product comprising the flour of the invention is selected from bakery products, fresh pasta, sauces, porridge, batter, meat preparations, and fish preparations.

Bakery products include, for example, breads, baguettes, loaves, pizzas, focaccia, quiches, cookies, butter cookies, tea pastries, pies, muffins, king's cake, fritters, pasties, patties, falafel, and Mexican tortillas.

Fresh pasta includes, for example, spaghetti, noodles, vermicelli, macaroni, ravioli, tortellini, lasagna, and cannelloni.

Sauces include those which require a thickener, for example, bechamel sauce.

The following embodiments are described in the present invention:
1.- A method for preparing substantially gluten-free cereal flour comprising the incubation of a mixture of flour and water with an enzyme selected from prolyl endoprotease, glutaminase, exopeptidase, endopeptidase, or mixture thereof, characterised in that the mixture of flour and water is subjected to an ultrasound treatment before incubation with the enzyme.
2.- The method according to the embodiment 1, characterised in that the flour is selected from wheat flour, barley flour, wheat bran, oat flour, rye flour, spelt flour, Kamut flour, wheat starch, wheat germ, and mixtures thereof; preferably the flour is selected from wheat flour, barley flour, oat flour, rye flour, spelt flour, Kamut flour, and mixtures thereof; more preferably the flour is selected from wheat flour, barley flour, oat flour, and mixtures thereof; and even more preferably the flour is wheat flour.
3.- The method according to the embodiment 1 or 2, characterised in that the proportion of flour in water is comprised between 0.1 g/ml and 0.7 g/ml, preferably between 0.2 g/ml and 0.5 g/ml, more preferably between 0.3 g/ml and 0.45 g/ml, and even more preferably about 0.4 g/ml.
4.- The method according to any of the embodiments 1 to 3, characterised in that the enzyme is a prolyl endoprotease.
5.- The method according to the embodiment 4, characterised in that the enzyme is an *Aspergillus niger* fungus prolyl endoprotease.
6.- The method according to the embodiments 4 or 5, characterised in that the prolyl endoprotease enzyme is incorporated in the form of a solution comprising between 45% and 55% by weight of glycerin, preferably about 50% by weight of glycerin.
7.- The method according to any of the embodiments 1 to 6, characterised in that the enzyme has an activity greater than or equal to 10 PSPU/g, preferably between 10 and 20 PSPU/g, preferably between 10 and 15 PSPU/g, even more preferably between 10 and 13 PSPU/g.
8.- The method according to any of the embodiments 1 to 7, characterised in that the ratio between the enzymatic activity and the flour is comprised between 0.1 PSPU/g of flour and 15 PSPU/g of flour, preferably between 0.2 PSPU/g and 10 PSPU/g, more preferably between 0.3 PSPU/g and 5 PSPU/g, more preferably between 0.4 PSPU/g and 2 PSPU/g, more preferably between 0.5 PSPU/g and 1 PSPU/g, and even more preferably about 0.6 PSPU/g.
9.- The method according to any of the embodiments 1 to 8, characterised in that the ultrasound treatment is carried out with an ultrasonic probe or in an ultrasonic bath.
10.- The method according to the embodiment 9, characterised in that the ultrasound treatment is carried out with an ultrasonic probe.
11.- The method according to the embodiment 10, characterised in that the ultrasound treatment is carried out with an ultrasonic probe of 20 kHz and 450 W of power, preferably with an amplitude of 21 µm.
12.- The method according to any of the embodiments 1 to 11, characterised in that water can be distilled, deionised or include a buffer system.
13.- The method according to any of the embodiments 1 to 12, characterised in that the incubation of the flour and water mixture with the enzyme is carried out at a pH between 2.0 and 6.5, preferably between 2.5 and 5.0, more preferably between 3.5 and 4.5, and even more preferably about 4.0.
14.- The method according to the embodiment 13, characterised in that the adjustment of the pH of the flour and water mixture is carried out by adding an acid or by means of the buffer system.
15.- The method according to the embodiment 14, characterised in that to adjust the pH, any organic or inorganic acid can be used as acid.
16.- The method according to the embodiment 15, characterised in that the acid is selected from acetic acid, citric acid, lactic acid, hydrochloric acid, sulphuric acid, or phosphoric acid.
17.- The method according to the embodiment 14, characterised in that the acetic acid-acetate buffer, the citric acid-citrate buffer, or citric acid-monohydrogen phosphate buffer is used as a buffer system; preferably the acetic-acetate buffer is used.
18.- The method according to any of the embodiments 1 to 17, characterised in that the incubation of the cereal flour with the enzyme is carried out at a temperature between 20 °C and 60 °C, preferably between 25 °C and 55 °C, more preferably between 30 °C and 50 °C, more preferably between 35 °C and 45 °C, and even more preferably between 40 °C and 45 °C.
19.- The method according to any of the embodiments 1 to 18, characterised in that
   the incubation time of the cereal flour with the enzyme is comprised between 1 h and 48 h, preferably between 10 h and 40 h, preferably between 15 h and 35 h, preferably between 20 h and 30 h, and more preferably approximately 24 h.
20.- The method according to any of the embodiments 1 to 19, characterised in that after incubation of the flour with the enzyme, the method includes as additional steps: centrifuging the mixture to remove most of the water to obtain a wet dough of treated flour, drying said wet dough, and grinding the treated flour once dry.
21.- A flour that is suitable for coeliacs that can be produced according to the method according to any one of the embodiments 1 to 20, characterised in that the flour is selected from wheat flour, barley flour, oat flour, rye flour, spelt flour, Kamut flour, and mixtures thereof; preferably the flour is selected from wheat flour, barley flour, oat flour, and mixtures thereof, and more preferably the flour is wheat flour.
22.- The flour according to the embodiment 21, characterised in that it contains no more than 20 ppm of gluten, preferably no more than 10 ppm of gluten, preferably less than 10 ppm of gluten.
23.- A food product suitable for coeliacs, characterised in that it comprises the flour of the embodiment 21 or 22.
24.- The food product according to the embodiment 23, characterised in that it comprises additional components selected from starch, fat, protein, sugar, chemical propellant, yeast, thickener, minerals, vitamins, aroma, water, and mixtures thereof.
25.- The food product according to the embodiment 23 or 24, characterised in that it is selected from bakery products, fresh pasta, sauces, porridge, batter, meat preparations, and fish preparations.
26.- The food product according to the embodiment 25, characterised in that the bakery product is selected from breads, baguettes, loaves, pizzas, focaccia, quiches, cookies, butter cookies, tea pastries, pies, muffins, king's cake, fritters, pasties, patties, falafel, and Mexican tortillas.
27.- The food product according to the embodiment 25, characterised in that the fresh pasta is selected from spaghetti, noodles, vermicelli, macaroni, ravioli, tortellini, lasagna, and cannelloni.
28.- The food product according to the embodiment 25, characterised in that the sauce is bechamel sauce.

### EXAMPLES

### Comparative Example 1: Preparation of wheat flour that is suitable for coeliacs

The flour was mixed with an aqueous solution of 0.1 M sodium acetate buffer and pH 4 in a glass bottle, and stirred until complete homogenisation.

An *Aspergillus niger* (DSM) proline-specific endopeptidase with an activity of 11 PSPU/g was added to this mixture. The ratio between the amount of enzyme and the amount of flour was approximately 0.6 PSPU/g of flour. The mixture was stirred for homogenisation.

The glass bottle was closed with a screw cap and kept for 24 hours in a water bath at a temperature of 43.5 °C and stirring at 130 rpm.

Next, it was centrifuged at 4000 rpm for 10 min. The supernatant was discarded, the solid was deposited in a thin layer on a stainless steel tray, and dried at a temperature of 80 °C for approximately 1 hour.

The dry flour was pulverised until obtaining a powder, which had a moisture content of approximately 2.4% by weight.

The method was performed in duplicate.

The gluten content of the flour obtained in the two treatments was analysed using the Gluten competitive R5 ELISA method, described in, for example, Koehler *et al.*, *op. cit.* The average gluten content of the two samples was 18.8 ppm, with a standard deviation of 5.2 ppm.

### Example 1: Preparation of wheat flour that is suitable for coeliacs by applying a sonication pretreatment

The flour was mixed with an aqueous solution of 0.1 M sodium acetate buffer and pH 4 in a glass bottle, and stirred until complete homogenisation.

The mixture was placed in a centrifuge tube and was subjected to sonication pretreatment with an Ultrasound Probe having a power of 450 W, 20 kHz (Branson, USA) for 30 seconds using 10% amplitude (equivalent to 21 µm).

After ultrasound treatment, an *Aspergillus niger* (DSM) proline-specific endopeptidase with an activity of 11 PSPU/g was added to this mixture. The ratio between the amount of enzyme and the amount of flour was approximately 0.6 PSPU/g of flour. The mixture was stirred for homogenisation.

The glass bottle was closed with a screw cap and kept for 24 hours in a water bath at a temperature of 43.5 °C and stirring at 130 rpm.

Next, it was centrifuged at 4000 rpm for 10 min. The supernatant was discarded, the solid was deposited in a thin layer on a stainless steel tray, and dried at a temperature of 80 °C for approximately 1 hour.

The dry flour was pulverised until obtaining a powder, which had a moisture content of approximately 2.4% by weight.

The method was performed in duplicate.

The gluten content of the flour obtained in the two treatments was analysed using the Gluten competitive R5 ELISA method. In both cases, a gluten content was obtained below the detection limit, in other words, lower than 10 ppm.

### Example 2: Preparation of muffins with wheat flour that is suitable for coeliacs

120 g of natural yogurt, 3 eggs, 100 g of olive oil, and 100 g of white sugar were mixed in a container until a homogeneous mixture was obtained. Next, 225 g of treated wheat flour that is suitable for coeliacs, 15 g of baking powder, and a pinch of salt were slowly added, and mixed until obtaining a homogeneous mixture. Said mixture was kept for 30 minutes in the refrigerator at 5 °C.

In the meantime, the oven was preheated at 250 °C.

The chilled mixture was placed in muffin cups, filling them ¾ parts of the volume, and baked for 15 minutes at 210 °C.

Muffins were obtained with the organoleptic properties of wheat flour, without the need to use any type of additive.

The appearance of the muffins obtained can be seen in Figure 1.

### Example 3: Preparation of cookies with wheat flour that is suitable for coeliacs and cinnamon

1000 g of wheat flour of the invention, 330 g of sugar, 50 g of chemical propellant, 75 g of xanthan gum and 7 g of ground cinnamon were mixed in a container.

Next, 420 g of eggs and 330 g of butter were added, and it was mixed until obtaining a homogeneous dough.

The obtained dough was kept for 2 hours in the refrigerator at 5 °C.

The chilled dough was rolled out with a rolling pin until the desired thickness was obtained, and the cookies were trimmed with a cookie cutter.

The cookies were placed on a baking dish and baked for 5 - 10 minutes in the preheated oven at 210°C.

### Example 4: Preparation of bread with wheat flour that is suitable for coeliacs

1000 g of wheat flour of the invention, 250 g of corn starch, 12 g of xanthan gum, 35 g of psyllium husk flour, 25 g of HPMC, 15 g of salt, and yeast were mixed in a container.

Next, 1600 g of water and 60 g of extra virgin olive oil were added, and mixed for at least 15 minutes until obtaining a homogeneous dough.

The homogeneous dough was poured onto a table and the pieces were formed. They were left to ferment until the volume doubled. Next, the pieces were bloomed, and steam cooked in the preheated oven at a temperature between 210 °C and 250 °C, depending on the type of pieces, for the time required to obtain the baked bread.

If more hydrated pieces are to be prepared, such as ciabatta or tin loaf, more water can be added to the mixture.

### Example 5: Preparation of fresh pasta with wheat flour that is suitable for coeliacs

500 g of wheat flour of the invention, 500 g of corn starch, 20 g of xanthan gum, and 16 g of salt were mixed in a container.

Next, 340 g of water, 340 g of extra virgin olive oil, and 200 g of eggs were added, and mixed until obtaining a uniform and elastic dough.

The obtained dough was kept for 2 hours in the refrigerator at 5 °C.

The chilled dough was rolled out with a rolling pin until the desired thickness was obtained, and it was trimmed. It was kept in the refrigerator and cooked in plenty of boiling water until *al dente.*

### Example 6: Preparation of butter cookies with wheat flour that is suitable for coeliacs

670 g of butter were fluffed with 340 g of sugar in a container. 1000 g of wheat flour of the invention were added to said dough, and it was mixed until obtaining a homogeneous dough.

The obtained dough was kept for 2 hours in the refrigerator at 5 °C.

The chilled dough was rolled out with a rolling pin until the desired thickness was obtained, and the cookies were trimmed with a cookie cutter.

The cookies were placed on a baking dish and baked for 5 - 10 minutes in the preheated oven at 210°C.

### Example 7: Preparation of tea pastries with wheat flour that is suitable for coeliacs

600 g of butter were fluffed with 400 g of powdered sugar in a container.

400 g of eggs were slowly added to this mixture and mixed without breaking the dough.

Next, 700 g of wheat flour of the invention, 300 g of corn starch, 12 g of xanthan gum, and vanilla essence were added, and mixed gently until obtaining a homogeneous dough.

The dough was spread with a rolling pin until the desired thickness was obtained, and the pasta was trimmed with a pasta cutter.

The pasta was placed on a baking dish and baked for 5 - 10 minutes in the preheated oven at 210°C.

## Claims

1. - A method for preparing a substantially gluten-free cereal flour comprising the incubation of a mixture of flour and water with an enzyme selected from prolyl endoprotease, glutaminase, exopeptidase, endopeptidase, or mixture thereof, **characterised in that** the mixture of flour and water is subjected to an ultrasound treatment before incubation with the enzyme.

2. The method according to claim 1, **characterised in that** the flour is selected from wheat flour, barley flour, wheat bran, oat flour, rye flour, spelt flour, Kamut flour, wheat starch, wheat germ, and mixtures thereof; preferably from wheat flour, barley flour, wheat bran, oat flour, and mixtures thereof.

3. - The method according to claims 1 or 2, **characterised in that** the proportion of flour in water is comprised between 0.1 g/ml and 0.7 g/ml, preferably between 0.2 g/ml and 0.5 g/ml, more preferably between 0.3 g/ml and 0.45 g/ml, and even more preferably about 0.4 g/ml.

4. - The method according to any of claims 1 to 3, **characterised in that** the enzyme is a prolyl endoprotease; preferably the enzyme is an *Aspergillus niger* fungus prolyl endoprotease.

5. The method according to claim 4, **characterised in that** the prolyl endoprotease enzyme is incorporated in the form of a solution comprising between 45% and 55% by weight of glycerin, preferably about 50% by weight of glycerin.

6. - The method according to any of claims 1 to 5, **characterised in that** the enzyme has an activity greater than or equal to 10 PSPU/g, preferably between 10 and 20 PSPU/g, preferably between 10 and 15 PSPU/g, even more preferably between 10 and 13 PSPU/g.

7. - The method according to any of claims 1 to 6, **characterised in that** the ratio between the enzymatic activity and the flour is comprised between 0.1 PSPU/g of flour and 15 PSPU/g of flour, preferably between 0.2 PSPU/g and 10 PSPU/g, more preferably between 0.3 PSPU/g and 5 PSPU/g, more preferably between 0.4 PSPU/g and 2 PSPU/g, more preferably between 0.5 PSPU/g and 1 PSPU/g, and even more preferably about 0.6 PSPU/g.

8. - The method according to any of claims 1 to 7, **characterised in that** the ultrasound treatment is carried out with an ultrasonic probe or in an ultrasonic bath; preferably is carried out with an ultrasonic probe.

9. The method according to claim 8, **characterised in that** the ultrasound treatment is carried out with an ultrasonic probe of 20 kHz and 450 W of power, preferably with an amplitude of 21 µm.

10. - The method according to any of claims 1 to 9, **characterised in that** the incubation of the flour and water mixture with the enzyme is carried out at a pH between 2.0 and 6.5, preferably between 2.5 and 5.0, more preferably between 3.5 and 4.5, and even more preferably about 4.0.

11. - The method according to the embodiment 10, **characterised in that** the adjustment of the pH of the flour and water mixture is carried out by adding an acid or by means of the buffer system.

12. - The method according to any of claims 1 to 11, **characterised in that** the incubation of the cereal flour with the enzyme is carried out at a temperature between 20 °C and 60 °C, preferably between 25 °C and 55 °C, more preferably between 30 °C and 50 °C, more preferably between 35 °C and 45 °C, and even more preferably between 40 °C and 45 °C.

13. - A flour that is suitable for coeliacs obtainable by the method according to any one of claims 1 to 12, **characterised in that** the flour is selected from wheat flour, barley flour, oat flour, rye flour, spelt flour, Kamut flour, and mixtures thereof; preferably the flour is selected from wheat flour, barley flour, oat flour, and mixtures thereof, and more preferably the flour is wheat flour; preferably the flour contains no more than 20 ppm of gluten, preferably no more than 10 ppm of gluten, and more preferably less than 10 ppm of gluten.

14. - A food product suitable for coeliacs, **characterised in that** it comprises the flour of claim 13.

15. - The food product according to claim 14, **characterised in that** it comprises additional components selected from starch, fat, protein, sugar, chemical propellant, yeast, thickener, minerals, vitamins, aroma, water, and mixtures thereof.
